(19) Europäisches Patentamt
European Patent Office
Office européen des brevets

(11) **EP 2 023 131 B1**

(12) **EUROPÄISCHE PATENTSCHRIFT**

(45) Veröffentlichungstag und Bekanntmachung des Hinweises auf die Patenterteilung:
**19.10.2011 Patentblatt 2011/42**

(51) Int Cl.:
***G01N 25/72*** *(2006.01)*

(21) Anmeldenummer: 07015631.0

(22) Anmeldetag: **08.08.2007**

(54) **Verfahren und Vorrichtung zur zerstörungsfreien Prüfung eines Objektes, das Materialanteile enthält, die magnetisch und elektrisch leitend sind**

Method and device for interference-free testing of an object containing material fractions which are magnetic and conductive

Procédé et dispositif destinés à la vérification sans destruction d'un objet contenant des parties de matériel magnétiques et électriques

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**11.02.2009 Patentblatt 2009/07**

(73) Patentinhaber: **Fraunhofer-Gesellschaft zur Förderung der angewandten Forschung e.V.**
**80686 München (DE)**

(72) Erfinder:
• **Netzelmann, Udo, Dr.**
**66113 Saarbrücken (DE)**
• **Walle, Günter**
**66399 Mandelbachtal (DE)**
• **Strauss, Holger**
**66802 Altforweiler (DE)**

(74) Vertreter: **Rösler, Uwe**
**Rösler Patentanwaltskanzlei**
**Landsberger Strasse 480a**
**81241 München (DE)**

(56) Entgegenhaltungen:
EP-A- 1 069 430    EP-A- 1 574 846
EP-A- 1 582 867    US-A- 5 562 345
US-B1- 6 399 948

• **UDO NETZELMANN, HOLGER STRAUSS, GÜNTER WALLE: "Zerstörungsfreie thermographische Methoden zur Detektion von Fehlern an Massivumform-Teilen" SCHMIEDE-JOURNAL, März 2007 (2007-03), XP002467542**
• **HOPPSTADTER D ET AL: "PHOTOTHERMALLY MODULATED STRAY FIELD IMAGING OF MAGNETIC MATERIALS" APPLIED PHYSICS LETTERS, AIP, AMERICAN INSTITUTE OF PHYSICS, MELVILLE, NY, US, Bd. 65, Nr. 4, 25. Juli 1994 (1994-07-25), Seiten 499-501, XP000464861 ISSN: 0003-6951**
• **WALLE G ET AL: "ZERSTOERUNGSFREIE PRUEFUNG MITTELS THERMOGRAPHISCHER VERFAHREN NON-DESTRUCTIVE TESTING WITH THERMOGRAPHIC TECHNIQUES" TECHNISCHES MESSEN TM, R.OLDENBOURG VERLAG. MUNCHEN, DE, Bd. 66, Nr. 9, September 1999 (1999-09), Seiten 312-321, XP000923890 ISSN: 0171-8096**
• **WALLE G: "IMPULS-VIDEO-THERMOGRAPHIE" MATERIALPRUEFUNG, HANSER, MUENCHEN, DE, Bd. 36, Nr. 3, März 1994 (1994-03), Seiten 86-88, XP002045761 ISSN: 0025-5300**

**EP 2 023 131 B1**

**Beschreibung**

**Technisches Gebiet**

Die Erfindung bezieht sich auf ein Verfahren sowie auf eine Vorrichtung zur zerstörungsfreien Prüfung eines Objektes, das Materialanteile enthält, die magnetisch und elektrisch leitend sind. Das Verfahren wird nach Art einer induktiv angeregten Thermographie durchgeführt, bei der in das Objekt elektrischer Wirbelstrom über wenigstens eine Objektoberfläche derart induziert wird, so dass eine Materialerhitzung des Objektes wenigstens innerhalb eines oberflächennahen Bereiches mit einer Eindringtiefe erfolgt, die der elektromagnetischen Skintiefe, $\delta = 1/\sqrt{\pi f \sigma \mu}$ entspricht, wobei f die Induktionsfrequenz, σ die elektrische Leitfähigkeit und μ die magnetische Permeabilität der magnetischen und elektrisch leitenden Materialanteile des Objektes sind, und bei der die sich ausbildende oberflächennahe Materialerhitzung sensorisch erfasst und ausgewertet wird.

Mit Hilfe der induktiv angeregten Thermographie können in Prüfobjekten, die zumindest aus einem elektrisch leitfähigen Material bestehen, oberflächennahe Defekte in Form von Rissen, Verwerfungen oder ähnlichen Strukturschwächungen nachgewiesen werden, indem mit Hilfe einer Induktionsspulenanordnung ein hochfrequenter Wirbelstrom in einen oberflächennahen Bereich des Prüfobjektes eingeprägt wird. Der sich innerhalb eines oberflächennahen Bereiches des Prüfobjektes ausbildende Wirbelstrom wird insbesondere an oberflächennahen Defekten der vorstehend genannten Art an seiner freien Ausbreitung behindert, so dass der induzierte Stromfluss an Defektstellen Umwege nehmen muss, ein Umstand, der sich durch eine lokal veränderte Stromdichte äußert. Mit der sich ändernden Stromdichte sind über Joule'sche Verluste auch lokale Erwärmungen verbunden, die zu Veränderungen in der Oberflächentemperaturverteilung vor allem in der Nähe von Fehlstellen führen. Grundsätzlich ist es möglich, derartige sich lokal ausbildende Temperaturgradienten mit Hilfe einer Infrarotkamera zu detektieren, wobei sich die Fehler im Infrarotbild während der Aufheizung sowie für eine Zeit danach als charakteristischer Kontrast gegenüber dem Hintergrund einer allgemeinen Erwärmung der Prüfobjektoberfläche sichtbar werden.

Wie bereits vorstehend erwähnt, müssen sich die zu detektierenden Oberflächendefekte bzw. Fehler innerhalb der so genannten elektromagnetischen Skintiefe $\delta = 1/\sqrt{\pi f \sigma \mu}$ befinden, zumal sich ausschließlich in diesem Oberflächenbereich elektrische Wirbelströme ausbilden. Falls die Fehler tiefer als die Skintiefe innerhalb des Prüfobjektes liegen, ist ein Fehlernachweis nur dann möglich, wenn der innerhalb der Skintiefe induktiv erzeugte Wärmepuls mit dem Fehler thermisch wechselwirkt.

**Stand der Technik**

Zur Qualitätsüberprüfung von Barren- oder Stangenprodukten wird seit längerem im industriellen Maßstab das vorstehend bezeichnete Verfahren zur induktiv angeregten Thermographie angewendet, indem einzelne Prüfobjekte in Richtung ihrer Längserstreckung durch eine Induktionsspulenanordnung gefördert werden und über aktive Wirbelstromanregung innerhalb der einzelnen Bauteile eine kurzzeitige Aufheizung erfahren. Diese Aufheizung wird nahe am Aufheizort, d.h. dem Einflussbereich der Spulenanordnung, mit einer Infrarotkameraanordnung optisch erfasst, wobei sich Defekte beispielsweise in Form von Rissen, durch lokale von der Infrarotkameraeinheit erfassbare Temperaturgradienten darstellen. Repräsentativ sei zur weiteren Erläuterung einer diesbezüglichen industriellen Anwendung auf die US 437251 sowie US 4480928 verwiesen.

Grundsätzlich lässt sich die induktiv angeregte Thermographie auch an Prüfobjekten, die aus einem nicht magnetischem Werkstoff bestehen, anwenden, wie dies beispielsweise aus der DE 19933446 zu entnehmen ist. Hier wird die Prüfung von Turbinenschaufeln auf Risse hin beschrieben, wobei mit Hilfe eines Hochfrequenzgenerators Wirbelstromimpulse im Frequenzbereich von 100 bis 300 kHz über geeignet geformte Induktionsspulen in die jeweilige zu untersuchende Turbinenschaufel eingekoppelt werden.

Beispiele zur Anwendung der induktiv angeregten Thermographie an magnetischen, und elektrisch leitenden Werkstoffen können überdies aus den folgenden Druckschriften entnommen werden:

B. Hillemeier, "Induktionsthermographie zur Ortung von Bewehrungsstählen", in: "Zerstörungsfreie Prüfung im Bauwesen", Tagungsbericht ZfP-Bau-Symposium, 2.-3.10.1985, Berlin, Hrsg. G. Schickert, D. Schnitger, BAM(DGZfP Berlin, 1986) Seite 287-295;
B. Oswald-Tranta, G. Wally, P. O'Leary, "Thermoinduktive Drahtinspektion für Oberflächenrisse", DGZfP Jahrestagung Rostock, 2.-4.5.2005, DGZfP Berichtsband 94-CD, Vortrag 59 (DGZfP Berlin 2005);
U. Netzelmann, H. Strauß und G. Walle, "Zerstörungsfreie thermographische Methoden zur Detektion von Fehlern an Massivumform-Teilen", Schmie.de-Journal, März 2007, Seite 26-28.

Problematisch bei induktiv angeregten thermographischen Prüfverfahren ist jedoch, dass die Nachweisempfindlichkeit zur Fehlerdetektion verbesserungsdürftig erscheint, zumal sich insbesondere bei kleindimensionierten Rissen nur schwach ausgeprägte Kontrastbilder auf den Infrarotaufnahmen abzeichnen, die im stets vorhandenen Untergrundsignal, das bereits durch die natürliche Oberflächenrauhigkeit des Prüfkörpers hervorgerufen wird, ununterscheidbar verschwindet. So nimmt der Risskontrast bei kleinen Rissen mit der Risslänge und der Risstiefe linear ab, zudem kann aufgrund des nur sehr geringen Risssignalpegels im Vergleich zum stets vorhandenen Störuntergrundsignal eine Rissorientierung aus dem IR-Kamerabild aufgrund ihrer begrenzten Auflösung nicht zuverlässig genau ermittelt werden.

Aus einem Beitrag von G. Riegert, T. Zweschper, G. Busse, "Lockin thermography with eddy current excitation", QIRT Journal 1 (2004), Seite 21-32, wird im Hinblick auf eine verbesserte Störunterdrückung vorgeschlagen, die Wirbelstromanregung sinusförmig amplitudenmoduliert vorzunehmen und die Infrarotkameraaufnahme mittels Lock-in-Technik bezogen auf die Frequenz der Amplitudenmodulation der Induktionsanregung abzustimmen. Zwar ist im so genannten Phasenbild der IR-Aufnahme eine verbesserte Störunterdrückung erzielbar, gleichwohl können die die Fehlstellen repräsentierenden Signalpegel nicht zufrieden stellend verstärkt werden.

Insbesondere bei der Untersuchung magnetischer und elektrisch leitender Prüfobjekte nutzt man alternativ zum vorstehend beschriebenen induktiv angeregten thermographischen Verfahren die Tatsache aus, dass an Defekten, wie beispielsweise Rissen, insbesondere wenn der Rissverlauf senkrecht zu den Magnetfeldlinien eines extern generierten statischen oder sich langsam zeitlich verändernden Magnetfeld orientiert ist, zusätzliche lokale magnetische Streufelder mit hohen magnetischen Feldgradienten austreten, die mittels geeigneter Magnetfeldsensoren nachgewiesen werden können. Derartige magnetische Streufelder treten bevorzugt an Risskanten aus.

Alternativ ist es gleichsam möglich', die lokal an Rissöffnungen auftretenden hohen Feldgradienten mit Magnetpulver-Prüfmittel sichtbar zu machen. Nachteilhaft bei derartigen magnetischen Streuflussprüfungen ist jedoch der große verfahrenstechnische Aufwand, der für eine zufrieden stellende Detektion von oberflächennahen Defekten betrieben werden muss. So gilt es einerseits bei Verwendung geeigneter Magnetfeldsensoren diese präzise an der Oberfläche des Prüfobjektes entlang zu führen, andererseits sind bei der Magnetpulververprüfung eine Reihe unterschiedlicher Arbeitsschritte erforderlich, die neben einem hohen Zeitaufwand letztlich auch einen hohen Kostenaufwand bedingen. Zudem können Magnetpulveransammlungen an Graten oder Innenkanten Fehl- oder Scheinanzeigen hervorrufen.

## Darstellung der Erfindung

Der Erfindung liegt die Aufgabe zugrunde ein Verfahren sowie eine Vorrichtung zur zerstörungsfreien Prüfung eines Prüfobjektes, das Materialanteile enthält, die magnetisch und elektrisch leitend sind, nach Art einer induktiv angeregten Thermographie derart weiterzubilden, dass einerseits der Nachweis von Defekten, wie beispielsweise Risse innerhalb der Objektoberfläche mit einer höheren Empfindlichkeit und Auflösung möglich wird, als es mit den bisherigen gattungsgemäßen Verfahren der Fall ist. Überdies soll der hierfür erforderliche verfahrenstechnische sowie auch vorrichtungsmäßige Aufwand kostengünstig und mit möglichst wenig zusätzlichem Aufwand realisierbar sein. Insbesondere soll die Gruppe der magnetischen Werkstoffe mit Hilfe der vorstehend beschriebenen induktiv angeregten Thermographietechnik mit einem verbesserten Fehlerkontrast und damit verbunden mit einem selektiveren Messergebnis sowie dem Wunsch nach einer geringeren Anfälligkeit für Scheinanzeigen untersucht werden können.

Die Lösung der der Erfindung zugrunde liegenden Aufgabe ist im Anspruch 1 angegeben. Gegenstand des Anspruches 11 ist eine lösungsgemäße Vorrichtung

Den erfindungsgemäßen Gedanken vorteilhaft weiterbildende Merkmale sind Gegenstand der Unteransprüche sowie der weiteren Beschreibung unter Bezugnahme auf die Ausführungsbeispiele zu entnehmen.

Bei den bisher bekannten Verfahrenstechniken zur zerstörungsfreien Prüfung magnetischer und elektrisch leitender Prüfobjekte im Wege der induktiv angeregten Thermographie wird davon ausgegangen, dass die magnetische Permeabitität $\mu$ lediglich als eine vorgegebene, unveränderliche Materialkonstante anzusehen ist, die dazu führt, dass bei gleicher Induktionsfrequenz f die Skintiefe $\delta$ bei magnetischen Werkstoffen deutlich kleiner wird. Die dem lösungsgemäßen Verfahren zugrunde liegende Erkenntnis nutzt im Gegensatz zu den bekannten Lösungen die Tatsache aus, dass bei einer Induktionsanregung die absorbierte Leistungsdichte nicht nur von der elektrischen Leitfähigkeit sowie der Induktionsstromdichte, sondern insbesondere auch von der magnetischen Permeabilität $\mu$ abhängt. In einem magnetischen Werkstoff ist die für die magnetischen Verluste wirksame dynamische magnetische Permeabilität dabei von der Größe und Orientierung der Magnetisierung abhängig. Beide, die Magnetisierung eines zu untersuchenden magnetischen sowie auch elektrisch leitenden Prüfkörpers bestimmenden Magnetisierungsparameter können durch ein zusätzliches äußeres Magnetfeld gezielt beeinflusst werden. Somit zeichnet sich das lösungsgemäße Verfahren zur zerstörungsfreien Prüfung eines magnetische und elektrisch leitende Materialanteile enthaltenen Prüfobjektes nach Art einer induktiv angeregten Thermographie nach den Merkmalen des Oberbegriffes des Anspruches 1 dadurch aus, dass zumindest der vom elektrischen Wirbelstrom erfassbare oberflächennahe Bereich wenigstens einem technisch erzeugbaren Magnetfeld ausgesetzt wird.

Durch das technisch erzeugbare, zusätzliche Magnetfeld ist im Bereich der zu prüfenden Objektoberfläche des Prüfobjektes mit veränderten Streufeldem, beispielsweise an dem im Prüfobjekt vorhandenen Rissflanken, die die zu detektierenden Fehler darstellen, auch eine lokale Veränderung der dynamischen magnetischen Permeabilität verbunden. Dies bewirkt jedoch einen bemerkenswerten Kontrastmechanismus, der über eine veränderte Wärmefreisetzung den Riss auch in thermographischen zum detektierenden Abbild deutlicher und selektiver anzuzeigen vermag. Untersuchungen haben ergeben, dass der durch die dynamische, magnetische Permeabilität verbundene Kontrastmechanismus in Abhängigkeit der räumlichen Orientierung des extern technisch erzeugbaren Magnetfeldes relativ zur Rissorientierung sowohl den Anzeigenkontrast verstärken, sowie aber auch schwächen kann. Um den Anzeigekontrast zielführend zu verstärken, ist es besonders vorteilhaft, die Magnetfeldlinien des extern technisch erzeugbaren Magnetfeldes möglichst senkrecht zum Rissverlauf eines zu detektierenden Risses zu orientieren.

Zur gerätetechnischen Umsetzung des lösungsgemäßen Verfahrens gilt es somit eine bisher bekannte Vorrichtung zur zerstörungsfreien Prüfung eines magnetisch und elektrisch leitenden Materialanteile enthaltenden Prüfobjektes nach Art einer induktiv angeregten Thermographie, bei der in das Objekt mittels einer über wenigstens einer Objektoberfläche angeordneten Induktionsspulenanordnung ein elektrischer Wirbelstrom derart induzierbar ist, so dass eine Materialerhitzung des Objektes wenigstens innerhalb eines oberflächennahen Bereiches mit einer Eindringtiefe erfolgt, die der elektromagnetischen Skintiefe entspricht, und bei der die sich ausbildende oberflächennahe Materialerhitzung mittels wenigstens einer Sensoreinheit erfasst und die dabei erhaltenen Sensorsignale mittels einer Steuerund Auswerteeinheit auswertbar sind, lösungsgemäß zumindest durch eine ein Magnetfeld erzeugende Einheit zu ergänzen, die innerhalb des vom elektrischen Wirbelstrom erfassbaren oberflächennahen Bereichs das Magnetfeld erzeugt.

Wie bereits vorstehend erläutert, kann der mit der lösungsgemäßen Vorrichtung verbesserte Anzeigenkontrast besonders verstärkt werden, wenn die Magnetfeldlinien senkrecht zu den Rissverläufen orientiert sind. Hierzu weist die magnetfelderzeugende Einheit vorzugsweise wenigstens zwei Permanentmagnet-Paare oder zwei Elektromagnetanordnungen auf, die jeweils ein Magnetfeld generieren, die beide innerhalb des vom elektrischen Wirbelstrom erfassbaren oberflächennahen Bereichs des Prüfobjektes orthogonal zueinander orientiert sind. Weitere Beschreibungen sind den nachstehenden Ausführungsbeispielen zu entnehmen.

## Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:

Fig. 1 Prüfvorrichtung mit einer Elektromagnetanordnung,

Fig. 2 Prüfanordnung mit zwei Elektromagnetanordnungen, und

Fig. 3 Darstellung des relativen Risskontrastes in Abhängigkeit zum angelegten Magnetfeld.

## Wege zur Ausführung der Erfindung, gewerbliche Verwendbarkeit

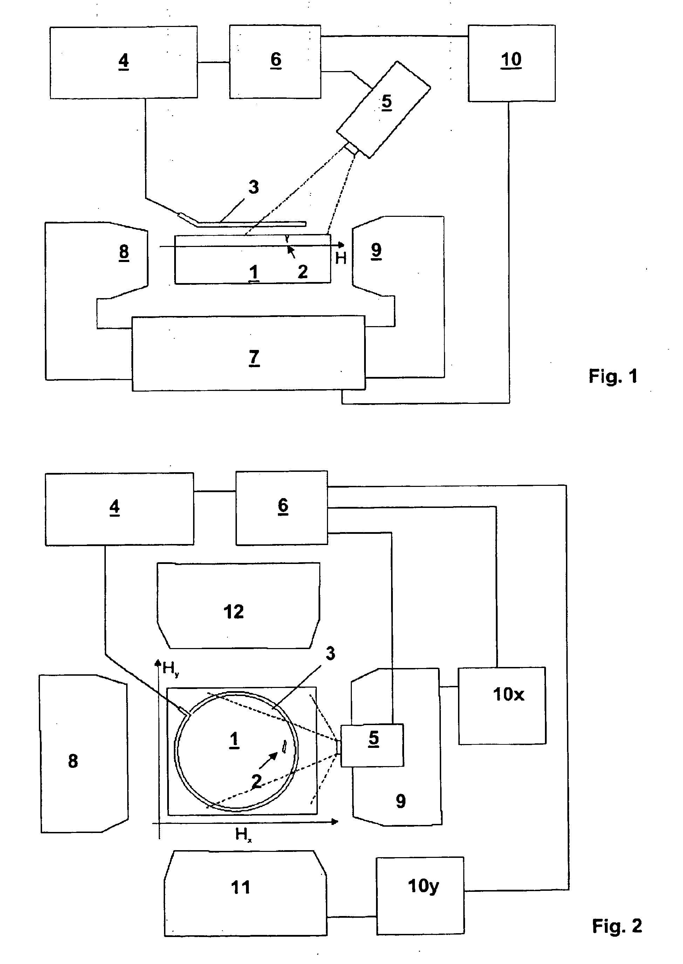

In Figur 1 ist eine stark schematisierte Anordnung zur Durchführung einer induktiv angeregten Thermographie an einem Prüfobjekt 1 mit oberflächennahen Fehlern 2, die es zu detektieren gilt. Zur Fehlerdetektion ist beabstandet oberhalb der Objektoberfläche des Prüfobjektes 1 eine Induktionsspulenanordnung 3 vorgesehen, die von einem Induktionsgenerator 4 gespeist wird. In üblicherweise sei davon ausgegangen, dass der Induktionsgenerator 4 die Induktionsspulenanordnung 3 mit einem Stromimpuls anregt, wodurch innerhalb der Skintiefe δ des Prüfobjektes 1 Wirbelströme generiert werden, die aufgrund Joule'scher Verlustwärme zu einer kurzzeitigen Erwärmung des oberflächennahen Bereiches des Prüfobjektes 1 führen, dessen Objektoberfläche von einer Infrarotkamera 5 erfasst wird. Die Infrarotkamera 5 ist mit einer Steuer- und Auswerteeinheit 6 verbunden, in der die seitens der Infrarotkamera 5 von der Prüfobjektoberfläche aufgenommenen IR-Bilder ausgewertet und einer entsprechenden, nicht weiter dargestellten Darstellungseinheit zur weiteren Analyse übergeben werden. Zudem ist die Steuer- und Auswerteeinheit 6 mit dem Induktionsgenerator 4 verbunden, so dass es möglich ist, die Ansteuerung des Induktionsgenerators 4 sowie die Infrarot-Kamera 5 zeitlich zu koordinieren, beispielsweise zur Realisierung des Lock-In-Verfahrens, auf das im weiteren noch eingegangen wird.

In lösungsgemäßer Weiterbildung sieht die in Figur 1 dargestellte Vorrichtung eine Elektromagneteinheit 7 vor, die ein Magnetjoch mit jeweils zwei stirnseitig sich gegenüberliegenden Magnetpolen 8, 9 vorsieht, zwischen denen eine im wesentlichen parallel zur Prüfobjektoberfläche orientiertes Magnetfeld H erzeugt wird. Auch die Elektromagnetanordnung 7 ist über einen Magnettreiber 10 mit der Steuer- und Auswerteeinheit 6 verbunden, so dass geeignete zeitlich koordinierte Ansteuerungen des Induktionsgenerators 4, der Infrarotkamera 5 sowie der Elektromagnetanordnung 7 realisierbar sind.

In einer ersten Verfahrensweise sei angenommen, dass zunächst ein statisches Magnetfeld H zwischen den Magnetpolen 8, 9 und dem dazwischen befindlichen Prüfobjekt 1 angelegt wird. Zur kurzzeitigen effektiven Erhitzung der Prüfobjektoberfläche des Prüfkörpers 1 wird durch die Steuer- und Auswerteeinheit 6 über den Induktionsgenerator 4 ein hochfrequenter Induktionspuls an die Induktionsspulenanordnung 3 abgegeben. Zeitlich kurz vor der Abgabe des Induktionspulses wird die Infrarotkamera 5 zur Aufnahme von Infrarotbildsequenzen der Prüfobjektoberfläche aktiviert bis einige Zeit nach dem Induktionspuls, wobei die von der Infrarotkamera 5 an die Auswerteeinheit 6 abgegebenen Infrarotbildsequenzen von der Steuer- und Auswerteeinheit 6 ausgewertet werden und hierbei der erhöhte Fehlerkontrast durch die extern angelegte Magnetisierung H genutzt wird.

Alternativ ist es möglich, mit Hilfe der in Figur 1 dargestellten Vorrichtung die induktiv angeregte Thermographie am Prüfobjekt 1 derart durchzuführen, dass bei einem an der Induktionsspulenanordnung 3 konstant anliegenden Induktionssignal f das Prüfobjekt 1 über die Steuereinheit 6 und dem Magnettreiber 10 einer Wechselmagnetisierung mit einer Wechselfrequenz $f_m$ auszusetzen, die wesentlich kleiner ist als die Induktionsfrequenz f, beispielsweise $f_m$ = 50Hz und f = 100 kHz bis 300 kHz. Bedarfsweise kann zur Wechselmagnetisierung $f_m$ zusätzlich auch ein Gleichstromvormagnetisierungsanteil vorgesehen werden, um einen möglichst hohen magnetfeldabhängigen Effekt zu erzielen. Aufgrund der vorstehend beschriebenen Verschaltung von Induktionsgenerator 4, Infrarotkamera 5 sowie die mit dem Magnettreiber 6 verbundene Elektromagnetanordnung 7 über die zentrale Steuer und Auswerteeinheit 6 ist die Realisierung einer Lock-In-Thermographie mit Signalanalyse bezüglich der Magnetisierungswechselfrequenz $f_m$ oder vorzugsweise 2 mal $f_m$ anwendbar, wodurch die durch die induzierten Permeabilitätsänderungen hervorgerufenen Veränderungen selektiv darstellbar sind und dies bei reduzierten Umgebungssignalen. So ist es zudem möglich, im Rahmen einer Bildphasenauswertung multiplikative Störgrößen, wie beispielsweise ein inhomogenes Induktionsspulenfeld, durch Nutzung geeigneter Korrelationsalgorithmen zu unterdrücken.

In Figur 2 ist eine Draufsicht auf eine alternative Vorrichtung zur Durchführung der induktiven angeregten Thermographie dargestellt, die im Unterschied zur Ausführungsform gemäß Figur 1 über zwei Magnetpaare 8, 9 sowie 11, 12 verfügt, die jeweils ein Magnetfeld $H_x$, Hy zu generieren vermögen, während Magnetfeldlinien orthogonal zueinander orientiert sind. Für die Magnetpaare 8, 9 sowie 11, 12 sind entsprechende Magnettreiber $10_x$ und $10_y$ vorhanden, die gleichsam dem Magnettreiber 10 gemäß Ausführungsbeispiel in Figur 1 mit der zentralen Steuer und Auswerteeinheit 6 verbunden sind. Alle übrigen in Figur 2 dargestellten Komponenten gleichen jenen gemäß Figur 1 und sehen identische Bezugszeichen vor. Auf eine wiederholte Beschreibung dieser Komponenten wird verzichtet.

Die in Figur 2 dargestellte Vorrichtung ermöglicht eine Wechselmagnetisierung mit einer Frequenz $f_m$ in der in der Figur 2 dargestellten x-Richtung und eine gleichzeitige, dazu um 90° phasenverschobene Wechselmagnetisierung mit der Frequenz $f_m$ in der in Figur 2 dargestellten y-Richtung, so dass eine umlaufende Magnetisierung realisierbar ist. Da die Aufheizung von der Rissorientierung zum äußeren Magnetfeld abhängt, können im Wege der Lock-In-Auswertung der Infrarotbilder, insbesondere aus der damit verbundenen Phasenanalyse, zusätzliche richtungsabhängige Effekte der Magnetisierung erkannt und weitere Informationen über die Rissorientierung gewonnen werden.

Zusätzlich lässt sich die in Figur 2 dargestellte Vorrichtung auch mit einem dritten Magnetpaar (nicht in Fig. 2 dargestellt) ergänzen, dessen Magnetfeldlinien gleichfalls orthogonal zu den bereits vorhandenen Magnetfeldern Hx, Hy orientiert ist, d.h. senkrecht zur dargestellten Oberfläche des Prüfobjektes in z-Richtung. Auf diese Weise können sämtliche innerhalb des Prüfobjektes 1 vorhandenen Risse höchstauflösend im Wege der induktiv angeregten Thermographie detektiert werden.

Nur der Vollständigkeit halber sei darauf hingewiesen, dass die Vorrichtung gemäß Figur 1 gleichfalls auch anstelle der beschriebenen Elektromagnetanordnungen mit Permanentmagneten realisierbar ist, wobei in diesem Fall zur induktiv angeregten Thermographie die Induktionsspule mit entsprechenden Induktionspulsen anzuregen ist, wie unter Bezugnahme auf Figur 1 erläutert.

Gilt es das lösungsgemäße Verfahren an bewegten Produkten anzuwenden, die relativ zur Magnetanordnung bewegt werden, so ist dies gleichfalls möglich unter Verwendung geeigneter hochdynamischer Infrarotdetektoren, beispielsweise von Infrarotzeilendetektoren.

Mit Hilfe der dargestellten Verfahrensvarianten werden bei der induktiv angeregten Thermographie die Kontraste von Oberflächenfehlern in magnetischen Werkstoffen gegenüber fehlerfreien Werkstoffoberflächen deutlich erhöht und damit die Fehlererkennbarkeit verbessert und zugleich die Pseudoausschussrate verringert.

Gegenüber der an sich bekannten Streuflussprüfung mit abtastenden Magnetfeldsenosren bietet die lösungsgemäße Verfahrensweise eine schnelle, flächige, flexible und berührungsfreie Prüfung selbst an kompliziert geformten Prüfobjekten an. Gegenüber der eingangs erläuterten Magnetpulverprüfung kann auf Magnetpulver als Prüfmittel und die zugehörigen Prozessschritte, wie beispielsweise Reinigen des Prüfobjektes etc. verzichtet werden.

Im Gegensatz zu den bekannten Lösungen insbesondere unter Verwendung der Lock-In-Technik wird beim lösungsgemäß angegebenen Verfahren das Magnetfeld moduliert und nicht die Induktionsanregung, wodurch eine besondere Empfindlichkeit in Bezug auf magnetfeldabhängige Effekte erreicht wird. Da die Magnetfeldabhängigkeit in Fehlernähe jedoch besonders hoch ist, wird der Fehler mit besserem Kontrast angezeigt.

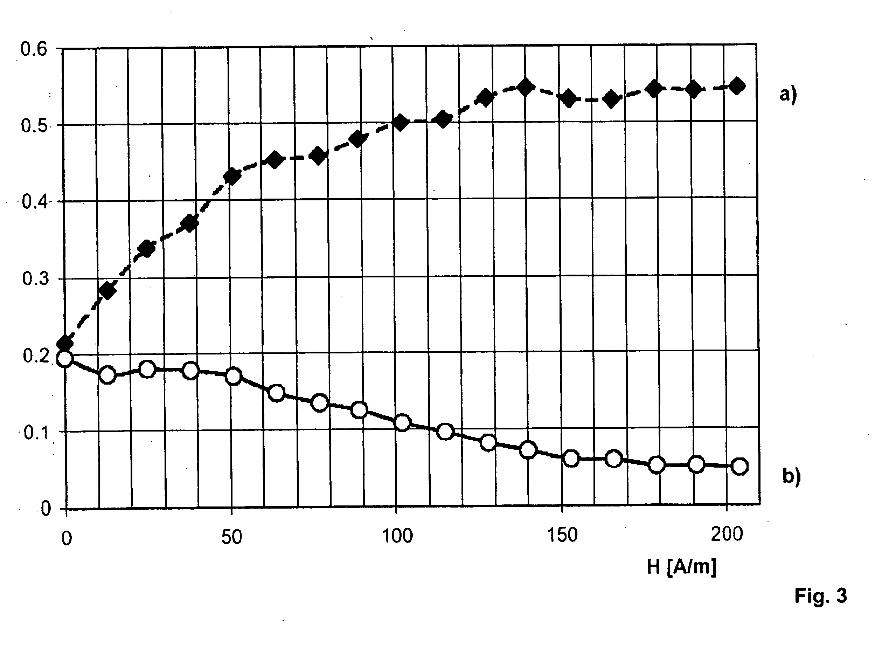

Letztlich wird in Figur 3 eine Diagrammdarstellung gezeigt, längs dessen Abszisse die Magnetisierung H und deren Ordinate der relative Risskontrast im Verhältnis zur Raumtemperatur dargestellt ist. Die in dem Diagramm dargestellten Messergebnisse sind mit einer Anordnung gemäß dem Ausführungsbeispiel in Figur 1 gewonnen worden, bei dem ein konstantes Magnetfeld H längs zur Prüfobjektoberfläche angelegt worden ist.

Dargestellt in dem in Figur 3 gezeigten Diagramm ist der relative thermographische Kontrast bei der Induktionsthermographie, d.h. Temperaturanstieg am Fehler dividiert durch den Temperaturanstieg im fehlerfreien Bereich einer Rissanzeige einer künstlich eingebrachten Nut in der Mitte einer quadratischen Platte. aus ferritischem Stahl. Dabei wurde in einem ersten Versuch a) ein äußeres Magnetisierungsfeld H senkrecht zur Nut und in einem zweiten Versuch b) ein Magnetisierungsfeld parallel zur Nut angelegt. Durch das externe Magnetfeld wird der Kontrast einmal um einen Faktor 2 bis 3 erhöht im anderen Fall um einen Faktor 2 bis 3 gesenkt.

**Bezugszeichenliste**

| | |
|---|---|
| 1 | Prüfobjekt |
| 2 | Fehler, Riss |
| 3 | Induktionsspulenanordnung |
| 4 | Induktionsgenerator |
| 5 | Infrarotkamera |
| 6 | Steuer- und Auswerteeinheit |
| 7 | Elektromagnetanordnung |
| 8, 9 | Magnetpole |
| 10, 10x, 10y | Magnettreiber |
| 11,12 | Magnete |

**Patentansprüche**

1. Verfahren zur zerstörungsfreien Prüfung eines Objektes (1), das Materialanteile enthält, die magnetisch und elektrisch leitend sind, nach Art einer induktiv angeregten Thermographie, bei der in das Objekt (1) mit einer über wenigstens einer Objektoberfläche angeordneten Induktionsspulenanordnung (3), in der ein Strom in einer zur Oberfläche parallelen Ebene, fließt, elektrischer Wirbelstrom über die wenigstens eine Objektoberfläche derart induziert wird, so dass eine Materialerhitzung des Objektes (1) wenigstens innerhalb eines oberflächennahen Bereiches mit einer Eindringtiefe erfolgt, die der elektromagnetischen Skintiefe, $\delta = 1/\sqrt{\pi f \sigma \mu}$ entspricht,
   wobei f die Induktionsfrequenz, $\sigma$ die elektrische Leitfähigkeit und $\mu$ die magnetische Permeabilität

der magnetischen und elektrisch leitenden Materialanteile des Objektes (1) sind, und bei der die sich ausbildende oberflächennahe Materialerhitzung sensorisch erfasst und ausgewertet wird, und bei der ein Defekt (2) im Objekt (1) aufgrund seiner Auswirkung auf eine lokale Stromdichteverteilung im Objekt (1) einen lokalen Temperaturgradienten bewirkt.
**dadurch gekennzeichnet, dass** zumindest der vom elektrischen Wirbetstrom erfassbare oberflächennahe Bereich wenigstens einem zusätzlichen technisch erzeugten, im Wesentlichen parallel zur Objektoberfläche ausgerichteten Magnetfeld ausgesetzt wird, und dass dieses bei Vorhandensein des Defektes (2) lokal in der Nähe des Defektes (2) veränderte magnetische Streufelder bewirkt, die dort die magnetische Permeabilität und damit die Skintiefe $\delta$, die lokale Stromdichteverteilung und den lokalen Temperaturgradienten verändern.

2. Verfahren nach Anspruch 1,
   **dadurch gekennzeichnet, dass** das technisch erzeugbare Magnetfeld als statisches Magnetfeld erzeugt wird.

3. Verfahren nach Anspruch 2,
   **dadurch gekennzeichnet, dass** der elektrische Wirbelstrom mittels eines Induktionspulses erzeugt wird, der an eine Induktionsspulenanordnung (3) angelegt wird, die oberflächennah über der Objektoberfläche positioniert wird.

4. Verfahren nach Anspruch 1,
   **dadurch gekennzeichnet, dass** das technisch erzeugbare Magnetfeld als Wechselmagnetfeld mit einer Wechselfrequenz $f_m$ erzeugt wird.

5. Verfahren nach Anspruch 4,
   **dadurch gekennzeichnet, dass** dem Wechselmagnetfeld ein magnetischer Gleichanteil aufgeprägt wird.

6. Verfahren nach Anspruch 4 oder 5,
   **dadurch gekennzeichnet, dass** der elektrische Wirbelstrom mittels der Induktionsfrequenz f erzeugt wird, die an eine Induktionsspulenanordnung (3) angelegt wird, die oberflächennah über der Objektoberfläche positioniert wird, und dass die Induktionsfrequenz f größer gewählt wird als $f_m$.

7. Verfahren nach Anspruch 6,
   **dadurch gekennzeichnet, dass** die sensorische Erfassung im Wege eines Lock-in-Verfahrens durchgeführt wird, bei der die sensorischer Erfassung auf der Grundlage der magnetischen Wechselfrequenz $f_m$ oder einer Vielfachen davon getriggert wird.

8. Verfahren nach einem der Ansprüche 1 bis 7,
   **dadurch gekennzeichnet, dass** wenigstens zwei Magnetfelder technisch erzeugt werden, deren zugehörige Magnetfeldlinien orthogonal zueinander orientiert sind.

9. Verfahren nach einem der Ansprüche 1 bis 8, **dadurch gekennzeichnet, dass** die sensorische Erfassung im Wege einer infrarotoptischen Detektion der Objektoberfläche erfolgt, bei der Bilddaten gewonnen und im Rahmen einer Bildauswertung ausgewertet werden.

10. Vorrichtung zur zerstörungsfreien Prüfung eines Objektes (1), das Materialanteile.
enthält, die magnetisch und elektrisch leitend sind, nach Art einer induktiv angeregten Thermographie, mit einer über wenigstens einer Objektoberfläche angeordneten Induktionsspulenanordnung (3), in der ein Strom in einer zur Oberfläche parallelen Ebene erzeugbar ist und mittels der elektrischer Wirbelstrom derart induzierbar ist, so dass eine Materialerhitzung des Objektes (1)
wenigstens innerhalb eines
oberflächennahen Bereiches mit einer Bereichstiefe erfolgt, die der elektromagnetischen Skintiefe $\delta = 1 / \sqrt{\pi f \sigma \mu}$ , entspricht, wobei f die Induktionsfrequenz, σ die elektrische Leitfähigkeit und μ die magnetische Permeabilität der magnetischen und elektrisch leitenden Materialanteile des Objektes sind, und bei der die sich ausbildende oberflächennahe Materialerhitzung mittels wenigstens einer Sensoreinheit (5) erfasst und die dabei erhaltenen Sensorsignale mittels einer Steuer- und Auswerteeinheit (6) auswertbar sind,
**dadurch gekennzeichnet, dass** zumindest eine ein im Wesentlichen parallel zur Oberfläche ausgerichtetes Magnetfeld erzeugende Einheit (3) vorgesehen ist, die innerhalb des vom elektrischen Wirbelstrom erfassbaren oberflächennahen Bereichs das Magnetfeld erzeugt.

11. Vorrichtung nach Anspruch 10, **dadurch gekennzeichnet, dass** die Magnetfeld erzeugende Einheit wenigstens zwei Permanentmagnete oder zwei Elektromagnetanordnungen (8,9,11,12) vorsieht, die jeweils ein Magnetfeld generieren, die innerhalb des vom elektrischen Wirbelstrom erfassbaren oberflächennahen Bereichs orthogonal zueinander orientiert sind.

**Claims**

1. Method for the non-destructive testing of an object (1) containing material components which are magnetically and electrically conducting, in the manner of an inductively excited thermography process, in which with the aid of an induction coil arrangement (3) arranged over at least one object surface and in which a current flows in a plane parallel to the surface, an electrical eddy current is induced into the object (1) over the at least one object surface, with the result that a material heating of the object (1) takes place at least inside a region close to the surface with a penetration depth corresponding to the

electromagnetic skin depth $\delta = 1 / \sqrt{(\pi f \sigma \mu)}$ ,

where f is the induction frequency, σ the electrical conductivity and μ the magnetic permeability of the magnetically and electrically conducting material components of the object (1), and in which the material heating that is formed close to the surface is detected by means of sensors, and in which a defect (2) in the object (1) causes a local temperature gradient by virtue of the effect thereof on a local current density distribution in the object (1),
**characterized in that** at least the region close to the surface that can be affected by the electrical eddy current is exposed to at least one additional magnetic field, generated by technical means, which is aligned substantially parallel to the object surface, and that when the defect (2) is present this causes stray magnetic fields which are locally modified near to the defect (2) and which modify the magnetic permeability and thus the skin depth δ, the local current density distribution and the local temperature gradient there.

2. The method according to Claim 1, **characterized in that** the magnetic field that can be generated by technical means is generated as a static magnetic field.

3. The method according to Claim 2, **characterized in that** the electrical eddy current is generated by means of an induction pulse which is applied to an induction coil arrangement (3) positioned above the object surface and close to the surface.

4. The method according to Claim 1, **characterized in that** the magnetic field that can be generated by technical means is generated as an alternating magnetic field with an alternating frequency $f_m$.

5. The method according to Claim 4, **characterized in that** a d.c. magnetic component is superimposed on the alternating magnetic field.

6. The method according to Claim 4 or 5, **characterized in that** the electrical eddy current is generated by means of the induction frequency f which is applied to an induction coil arrangement (3) positioned above the object surface and close to the surface, and that the induction frequency f is chosen to be greater than $f_m$.

7. The method according to Claim 6, **characterized in that** the detection by sensors is carried out by means of a lock-in method, in which the detection by sensors is triggered on the basis of the magnetic alternating frequency of the field $f_m$ or a multiple thereof.

8. The method according to one of Claims 1 to 7, **characterized in that** at least two magnetic fields are generated by technical means, the associated magnetic field lines of which are oriented orthogonally to one another.

9. The method according to one of Claims 1 to 8, **characterized in that** the detection by sensors takes place by means of an infrared-optical detection of the object surface, in which image data are obtained and analysed as part of an image analysis process.

10. Device for the non-destructive testing of an object (1) containing material components which are magnetically and electrically conducting, in the manner of an inductively excited thermography process, having an induction coil arrangement (3) arranged over at least one object surface in which a current can be generated in a plane parallel to the surface, and by means of which an electrical eddy current can be induced with the result that a material heating of the object (1) takes place, at least inside a region close to the surface with a region thickness which corresponds to the electromagnetic skin depth $\delta = 1/\sqrt{(\pi f \sigma \mu)}$ , where f is the induction frequency, $\sigma$ the electrical conductivity and $\mu$ the magnetic permeability of the magnetically and electrically conducting material components of the object, and in which the material heating that is formed close to the surface is detected by means of at least one sensor unit (5) and the sensor signals thereby obtained can be analysed by means of a control and analysis unit (6),

**characterized in that** at least one unit (3) is provided, generating a magnetic field aligned substantially parallel to the surface, which generates the magnetic field inside the region close to the surface that can be affected by the electrical eddy current.

11. The device according to Claim 10, **characterized in that** the unit generating the magnetic field provides two permanent magnets or two electromagnet arrangements (8, 9, 11, 12), each of which generates a magnetic field, said magnetic fields being oriented orthogonally to one another inside the region close to the surface that can be affected by the electrical eddy current.

## Revendications

1. Procédé pour l'essai non destructif d'un objet (1), qui contient des fractions de matière magnétiques et électroconductrices, à la façon d'une thermographie excitée de façon inductive, lors de laquelle du courant de Foucault électrique est induit par la au moins une surface d'objet dans l'objet (1) avec un agencement de bobine d'induction (3) disposé sur au moins une surface d'objet, dans lequel un courant circule dans un plan parallèle à la surface, de telle sorte qu'un réchauffement de matière de l'objet (1) s'effectue au moins à l'intérieur d'une zone proche de la surface avec une profondeur de pénétration qui correspond à l'épaisseur de peau électromagnétique, $\delta = 1/\sqrt{(\pi f \sigma \mu)}$ , f étant la fréquence d'induction, $\sigma$ la conductibilité électrique et $\mu$ la perméabilité magnétique des fractions de matière magnétiques et électroconductrices de l'objet (1), et lors de laquelle le réchauffement de matière proche de la surface qui se forme est détecté par capteur et analysé, et lors de laquelle un défaut (2) dans l'objet (1) entraîne un gradient de température local en raison de sa répercussion sur une répartition locale de la densité de courant dans l'objet (1), **caractérisé en ce qu'**au moins la zone proche de la surface, pouvant être enregistrée par le courant de Foucault électrique, est exposée à au moins un champ magnétique supplémentaire, généré techniquement, orienté sensiblement parallèlement à la surface d'objet, et **en ce que** ce champ entraîne, en cas de présence du défaut (2), localement à proximité du défaut (2), des champs de dispersion magnétiques modifiés, qui modifient à cet endroit la perméabilité magnétique et donc l'épaisseur de peau $\delta$, la répartition locale de la densité de courant et le gradient de température local.

2. Procédé selon la revendication 1, **caractérisé en ce que** le champ magnétique pouvant être généré techniquement est généré comme champ magnétique statique.

3. Procédé selon la revendication 2, **caractérisé en ce que** le courant de Foucault électrique est généré au moyen d'une impulsion d'induction, qui est appliquée sur un agencement de bobine d'induction (3), lequel est positionné à proximité de la surface au-dessus de la surface d'objet.

4. Procédé selon la revendication 1,

**caractérisé en ce que** le champ magnétique pouvant être généré techniquement est généré comme champ magnétique alternatif avec une fréquence alternative $f_m$.

5. Procédé selon la revendication 4,
**caractérisé en ce qu'**une fraction identique magnétique est appliquée au champ magnétique alternatif.

6. Procédé selon la revendication 4 ou 5,
**caractérisé en ce que** le courant de Foucault électrique est généré au moyen de la fréquence d'induction f, qui est appliquée sur un agencement de bobine d'induction (3), lequel est positionné à proximité de la surface au-dessus de la surface d'objet, et **en ce que** la fréquence d'induction f est choisie supérieure à $f_m$.

7. Procédé selon la revendication 6,
**caractérisé en ce que** la détection par capteur est effectuée par la voie d'un procédé de bocage, lors de laquelle la détection par capteur est déclenchée sur la base de la fréquence alternative $f_m$ magnétique ou d'un multiple de celle-ci.

8. Procédé selon l'une quelconque des revendications 1 à 7,
**caractérisé en ce qu'**au moins deux champs magnétiques sont générés techniquement, dont des lignes de champ magnétique spécifiques sont orientées perpendiculairement entre elles.

9. Procédé selon l'une quelconque des revendications 1 à 8,
**caractérisé en ce que** la détection par capteur s'effectue par la voie d'une détection optique infrarouge de la surface d'objet, lors de laquelle des données d'image sont obtenues et sont analysées dans le cadre d'une analyse d'image.

10. Dispositif pour l'essai non destructif d'un objet (1), qui contient des fractions de matière magnétiques et électroconductrices, à la façon d'une thermographie excitée de façon inductive,
comprenant un agencement de bobine d'induction (3) disposé au-dessus d'au moins une surface d'objet, dans lequel un courant peut être généré dans un plan parallèle à la surface et au moyen duquel un courant de Foucault électrique peut être induit, de telle sorte qu'un réchauffement de matière de l'objet (1) s'effectue au moins à l'intérieur d'une zone proche de la surface avec une profondeur de zone qui correspond à l'épaisseur de peau électromagnétique, $\delta = 1 / \sqrt{(\pi f \sigma \mu)}$, f étant la fréquence d'induction, $\sigma$ la conductibilité électrique et $\mu$ la perméabilité magnétique des fractions de matière magnétiques et électroconductrices de l'objet, et lors de laquelle le réchauffement de matière proche de la surface qui se forme est détecté au moyen d'au moins une unité capteur (5) et les signaux de capteur obtenus alors peuvent être analysés au moyen d'une unité de commande et d'analyse (6),
**caractérisé en ce qu'**au moins une unité (3) générant un champ magnétique sensiblement parallèle à la surface est prévue, laquelle génère le champ magnétique à l'intérieur de la zone proche de la surface et pouvant être détectée par le courant de Foucault électrique.

11. Dispositif selon la revendication 10,
**caractérisé en ce que** l'unité générant du champ magnétique prévoit au moins deux aimants permanents ou deux agencements d'électroaimant (8, 9, 11, 12), qui génèrent chacun un champ magnétique, lesquels champs sont orientés perpendiculairement entre eux à l'intérieur de la zone proche de la surface et pouvant être détectée par le courant de Foucault électrique.

Fig. 1

Fig. 2

**Fig. 3**

**IN DER BESCHREIBUNG AUFGEFÜHRTE DOKUMENTE**

**In der Beschreibung aufgeführte Patentdokumente**

- US 437251 A
- US 4480928 A
- DE 19933446

**In der Beschreibung aufgeführte Nicht-Patentliteratur**

- Induktionsthermographie zur Ortung von Bewehrungsstählen. **HILLEMEIER.** Zerstörungsfreie Prüfung im Bauwesen'', Tagungsbericht ZfP-Bau-Symposium. 02. Oktober 1985, 287-295
- **OSWALD-TRANTA ; G. WALLY ; P. O'LEARY.** Thermoinduktive Drahtinspektion für Oberflächenrisse. *DGZfP Jahrestagung Rostock,* 02. Mai 2005, vol. 94-CD
- **NETZELMANN ; H. STRAUß ; G. WALLE.** Zerstörungsfreie thermographische Methoden zur Detektion von Fehlern an Massivumform-Teilen. *Schmie.de-Journal,* Marz 2007, 26-28
- **G. RIEGERT ; T. ZWESCHPER ; G. BUSSE.** Lockin thermography with eddy current excitation. *QIRT Journal,* 2004, vol. 1, 21-32